Europäisches Patentamt

European Patent Office

Office européen des brevets

(19)

(11) Publication number: **0 008 841**
**B1**

(12) **EUROPEAN PATENT SPECIFICATION**

(45) Date of publication of patent specification: **16.12.81**

(51) Int. Cl.³: **B 62 J 3/00, G 10 K 1/26**

(21) Application number: **79200503.5**

(22) Date of filing: **11.09.79**

(54) A bell for a bicycle.

(30) Priority: **11.09.78 NL 7809244**

(43) Date of publication of application:
**19.03.80 Bulletin 80/6**

(45) Publication of the grant of the European patent:
**16.12.81 Bulletin 81/50**

(84) Designated Contracting States:
**BE CH DE FR GB**

(56) References cited:
**CH - A - 193 206**
**FR - A - 1 587 065**
**FR - A - 2 325 553**
**GB - A - 850 877**
**GB - A - 877 681**
**NL - A - 67 04464**

(73) Proprietor: **WIDEK B.V.**
**15 Parallelweg**
**NL-2921 LE Krimpen a/d IJssel (NL)**

(72) Inventor: **de Kwant, Pieter**
**Parallelweg 15**
**NL-2921 LE Krimpen a/d Yssel (NL)**

(74) Representative: **Mathol, Heimen et al,**
**EXTERPATENT 3 & 4 Willem Witsenplein**
**NL-2596 BK The Hague (NL)**

Courier Press, Leamington Spa, England.

A bell for a bicycle

The present invention concerns a cycle bell comprising a supporting plate to be secured upon a rod by means of a clip, further comprising a sound cap and a movable spring-biased striker tongue, the supporting plate being provided with an element for mounting and securing the sound cap, as is known inter alia from GB A 850.877.

Known cycle bells mostly consist of a great number of loose components to be interconnected with one another. The latter construction applies both to the spring-biased member, the striker tongue and the clip for mounting and securing the supporting plate. In known bells for bicycles, said clip mainly consists of two parts which have to be clamped about the rod of a cycle (handlebar) by means of bolts. From the above it follows that the manufacture and mounting of known bells is rather time consuming, thus causing the expenditures to be substantial.

The present invention aims to provide a cycle bell, the components of which can be easily and quickly interconnected, whilst the whole can be mounted upon a bicycle in a simple manner.

These objects are attained in accordance with the invention in that the supporting plate, the clip, the striker tongue with a spring member and the securing element are integral and consist of an (injection) moulded plastic resin element.

Because of the components now being united into one integral element, a simplification in the mounting of the bell is obtained.

The clip also forming part of said element, will cause a securing of the bell to be performed in a shorter period of time. A plastic resin element offers a further advantage in that the bell as a whole is lighter in weight, a fact which is important for racing cycles or sports cycles.

In a preferred embodiment the present integral element consists of the flat supporting plate, upon the upper side of which the spring member, the striker tongue and the securing element are mounted, one end of the supporting plate continuing into a flexible band constituting the clip, the free end of said band being provided with a closing strip engaging in a lock, located underneath the plate.

In its present form the flexible band can be bent easily about a rod (handlebar) of a bicycle, thus enabling the closing strip to extend into the lock and to be engaged within the latter. It will be obvious from the foregoing that the bell for the cycle can presently be mounted by means of a single operation, that is the action of engaging the closing strip within the lock.

The securing element preferably consists of a cylindrical sleeve, receiving a snapping pin for securing the sound cap, causing the latter to be mounted by pressing the snapping pin into the sleeve. In this manner the sound cap can be simply mounted by pressing the pin into the sleeve. This procedure is considerably less time consuming in comparison with the known methods of securing a cycle bell by tightening the sound cap.

For a better understanding of the present invention and to show how the same may be put into effect, reference will now be made, by way of example, to the accompanying drawings, in which:

Figure 1 shows an exploded side view with partial cross sections of a cycle bell in accordance with the invention;

Figure 2 shows a plan view according to line II-II in Figure 1, and

Figure 3 shows a cross-sectional view according to line III-III in Figure 2.

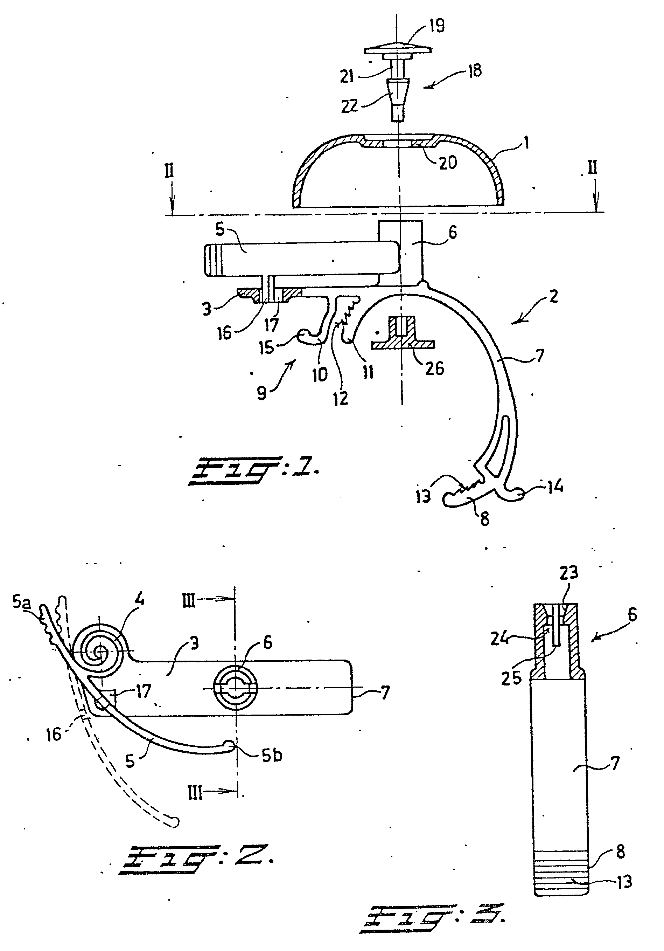

As can be seen in Figure 1, the cycle bell substantially consists of a sound cap 1 and an element 2, combining a plurality of functions. Said element 2 is formed by a flat rectangular plate 3, the upper side of said plate 3, comprising a spring member 4 onto which a striker tongue 5 is attached. The upper side of said flat plate 3 further comprises a securing element 6 for the mounting of the sound cap 1. One end of the flat plate 3 merges into a flexible band 7, the extremity of which being provided with a closing strip 8 interacting with a lock 9, consisting of two lips 10 and 11. Lip 11 is provided with a saw-tooth profiled surface 12, interacting with a similar saw-tooth surface 13 upon the closing strip 8. This strip is at one side provided with a projection 14 by means of which the flexible band 7 can be seized. The lip 10 likewise comprises a projection 15 identical to said projection 14 upon the closing strip 8. When seizing these projections 14 and 15, the closing strip 8 can be easily pressed between the lips 10 and 11 and thus get engaged.

The striker tongue 5 consists of a spring-biased rod-shaped part, one end of which being provided with an operating knob 5a, the other end comprising a thickened portion 5b serving for acting upon the inside of the sound cap 1. The lowermost side of the tongue 5 comprises an injection moulded extension 16 which projects through an orifice 17 in the support plate 3.

The sound cap 1 can be connected with the element 2 by means of a snapping pin 18 interacting with the securing element 6.

The snapping pin 18 consists of a wide flat head 19, which rests, when being mounted, in a recessed part 20 of the sound cap 1. The snapping pin 18 further comprises a cylindrical portion 21, the centre of said portion being provided with a tapering widening 22. The securing element 6 consists of a cylindrical sleeve being open at either side. The internal profile of said sleeve, as seen from the upper side, first comprises a conical narrowing 23, then a step-shaped widening 24, whereafter a constant diameter is maintained (vide Fig. 3). In the wall of the sleeve two slits 25 are provided, located diametrically opposite one another.

The lowermost orifice of the sleeve comprises a rubber cap 26, which may receive the end of the cylindrical part 21 of the snapping pin 18. Said rubber cap 26 is provided with a collar, adjoining the rod upon which the cycle bell has been mounted and so preventing a rotation of the cycle bell about the said rod.

The element 2 consists of a suitable plastic resin and is manufactured by injection-moulding, in a shape as shown in Figure 1. The orifice 17 in plate 3 is provided for technical reasons to be explained as follows: by means of said orifice 17 the extension 16 can be injection-moulded to the striker tongue 5. During the initial instalment of the bell said extension 16 is removed from said orifice 17 and subsequently the striker tongue 5 is pivoted against the tension of the spring member 4, until said extension 16 projects beyond said plate 3. Consequently said extension 16 of said striker tongue 5 presently rests spring-biased against the side edge of plate 3, as shown in Figure 2 in dotted lines. This allows a mounting of the sound cap 1 by means of the snapping pin 18. At that moment the spring member 4 and the striker tongue 5 are located entirely beyond the sound cap 1. The rubber cap 26 is presently put into the lowermost opening of the securing element 6, and the cycle bell can subsequently be mounted upon a bar of a cycle by simply engaging the strip 8 in the lock 9. The cycle bell as arranged according to the foregoing description does not comprise any screwed joints and is composed of a minimum number of parts, thus enabling a quick and appropriate mounting.

The cycle bell in accordance with the invention operates as follows: by displacing the operating knob 5a, the striker tongue 5 will be moved against the force of the spring member 4. When said knob 5a is subsequently released, said striker tongue 5 will rebound until the time that the extension 16 will rest again against the side of plate 3. Due to the resiliency of the tongue 5, the thickening 5b of the latter tongue will, however, continue its swinging movement, until it strikes against the sound cap, thus producing the desired ringing sound(s).

**Claims**

1. A bell for a bicycle comprising a supporting plate (3) to be secured upon the handlebar of a bicycle by means of a clip (7), further comprising a sound cap (1) and a movable spring-biased striker tongue (5), the supporting plate being provided with an element (6) for mounting and securing the sound cap, characterised in that the supporting plate (3), the clip (7), the striker tongue (5) with a spring member (4) and the securing element (6) are formed by one plastic resin injection-moulded integral element (2).

2. A bell for a bicycle according to claim 1, in which the integral element (2) consists of the flat supporting plate (3) upon the upper side of which the spring member (4), the striker tongue (5), as well as the securing element (6) are mounted one end of the plate (3) continuing into a flexible band (7) constituting the clip, the free end of the band being provided with a closing strip (8), engaging in a lock (9) located underneath the plate (3).

3. A bell for a bicycle according to claim 2, in which the lock consists of two interspaced lips (10, 11) at least one of said lips being provided with a saw-tooth surface (12) so interacting with a correspondingly profiled surface (13) of the closing strip (8), that the strip can be easily slid between the lips (10 and 11), a return movement of said strip being prevented.

4. A bell for a bicycle according to any of the foregoing claims, in which the spring member (4) consists of a spiral-shaped strip, one end of which being attached to the flat plate (3), the other end supporting the striker tongue (5).

5. A bell for a bicycle according to claim 4, in which the striker tongue (5) is provided with an extension (16) directed perpendicular to the supporting plate (3) said extension abutting against a side edge of the plate.

6. A bell for a bicycle according to any of the foregoing claims, in which the securing element (6) consists of a cylindrical sleeve capable of receiving a snapping pin (18) for securing the sound cap (1).

7. A bell for a bicycle according to claim 6, in which either side of the cylindrical sleeve is open, whilst the lowermost orifice of the sleeve is sealed off by a rubber cap (26), receiving on the one hand the end of the snapping pin (18), and comprising on the other hand a collar, which, when being mounted, forms an additional frictional surface inside the securing clip (7), thus preventing a rotation of the cycle bell about the handlebar.

**Revendications**

1. Timbre pour bicyclette comprenant une plaque de support (3) destinée à être fixée sur le guidon d'une bicyclette à l'aide d'un collier de serrage (7), ainsi qu'un couvercle sonore (1) et une languette mobile (5) de percussion sous contrainte élastique, la plaque de support étant munie d'un élément (6) apte à permettre la mise en place et la fixation du couvercle sonore, caractérisé en ce que la plaque de support (3), le collier de serrage (7), la languette de percussion (5), munie d'un élément ressort (4), et l'élément de fixation (6) sont formés d'une seule pièce combinée (2) en résine synthétique moulée par injection.

2. Timbre pour bicyclette selon la revendication 1, dans lequel la pièce combinée (2) est constituée par la plaque plate de support (3) sur le côté supérieur de laquelle sont montés l'élément ressort (4), la languette de percussion (5), ainsi que l'élément de fixation (6), l'une des extrémités de la plaque de support (3) se prolongeant dans une bride flexible (7) formant le collier de serrage, l'extrémité libre de cette bride étant pourvue d'une patte de fermeture (8) s'engageant dans un élément de verrouillage (9) disposé sous la plaque (3).

3. Timbre pour bicyclette selon la revendication 2, dans lequel l'élément de verrouillage est constitué de deux lèvres (10, 11) espacées l'une de l'autre, l'une de ces lèvres au moins présentant une surface en dents de scie (12) coopérant de telle sorte avec une surface (13), profilée de façon correspondante, sur la patte de fermeture (8) que cette dernière puisse facilement être glissée entre les lèvres (10 et 11), un mouvement de retour de la patte de fermeture étant empêchée.

4. Timbre pour bicyclette selon l'une quelconque des revendications précédentes, dans lequel l'élément ressort (4) est constitué par une bande en forme de spirale dont l'une des extrémités est fixée à la plaque plate (3), l'autre supportant la languette de percussion (5).

5. Timbre de bicyclette selon la revendication 4, dans lequel la languette de percussion (5) est pourvue d'un appendice (16) disposé perpendiculairement à la plaque de support (3), cet appendice venant buter contre un bord latéral de la plaque.

6. Timbre de bicyclette selon l'une quelconque des revendications précédentes, dans lequel l'élément de fixation (6) est constitué par une douille capable de recevoir une goupille (18) à engagement élastique pour assurer la fixation du couvercle sonore (1).

7. Timbre de bicyclette selon la revendication 6, dans lequel les extrémités opposées de la douille sont ouvertes, l'orifice inférieur de la douille étant obturé par une capsule (26) en caoutchouc, laquelle d'une part reçoit l'extrémité de la goupille à engagement élastique et d'autre part est pourvue d'une collerette qui, lors du montage, fournit une surface additionnelle de frottement à l'intérieur du collier de fixation (7), empêchant ainsi la rotation du timbre autour du guidon.

**Patentansprüche**

1. Fahrradklingel mit einer an einer Lenkstange eines Fahrrads durch einen Klipp (7) zu befestigenden Tragplatte (3), einer Glocke (1) und einem bewegbaren, federbelasteten Glockenschlegel (5), bei der die Tragplatte mit einem Teil (6) zum Befestigen und Sichern der Glocke versehen ist, dadurch gekennzeichnet, daß die Tragplatte (3), der Klipp (7), der Glockenschlegel (5) mit einem Federteil (4) und das Sicherungsteil (6) als ein einstückig im Spritzgußverfahren aus Kunstharz hergestelltes Teil (2) ausgebildet sind.

2. Fahrradklingel nach Anspruch 1, bei der das Teil (2) aus einer flachen Tragplatte (3) besteht, an deren oberer Seite das Federteil (4), der Glockenschlegel (5) sowie das Sicherungsteil (6) angeordnet sind, wobei ein Ende der Tragplatte (3) als biegsames Band (7) ausgestaltet ist, welches den Klipp darstellt und dessen freies Ende mit einem Schließstreifen (8) versehen ist, der in ein Schloß (9) unterhalb der Tragplatte (3) eingreift.

3. Fahrradklingel nach Anspruch 2, bei der das Schloß aus zwei im Abstand voneinander angeordneten Zungen (10, 11) besteht, wobei zumindest eine Zunge mit einer sägezahnförmigen Oberfläche (12) versehen ist und mit einer entsprechenden Oberfläche (13) des Schließstreifens (8) so zusammenwirkt, daß der Schließstreifen leicht zwischen die Zungen (10, 11) eingeschoben werden kann, während eine Rückwärtsbewegung des Schließstreifens ausgeschlossen ist.

4. Fahrradklingel nach einem der vorstehenden Ansprüche, bei welcher das Federteil (4) aus einem spiralförmigen Band besteht, dessen eines Ende an der flachen Tragplatte (3) befestigt ist, während das andere Ende den Glockenschlegel (5) trägt.

5. Fahrradklingel nach Anspruch 4, bei welcher der Glockenschlegel (5) mit einem Vorsprung (16) versehen ist, der senkrecht zur Tragplatte (3) angeordnet ist, wobei der Vorsprung gegen eine Seite der Tragplatte anschlägt.

6. Fahrradklingel nach einem der vorstehenden Ansprüche, bei der das Sicherungsteil (6) aus einer zylindrischen Muffe besteht, die einen Schnappstift (18) zur Befestigung der Glocke (1) aufnehmen kann.

7. Fahrradklingel nach Anspruch 6, bei der beide Seiten der zylindrischen Muffe offen sind, wobei die untere Öffnung der Muffe von einer Gummikappe (26) verschlossen ist, die auf der einen Seite das Ende des Schnappstiftes (18) aufnimmt und auf der anderen Seite einen Bund aufweist, welcher montiert eine zusätzliche Reibfläche auf der Innenseite des Klipps (7) bildet und so ein Verdrehen der Fahrradklingel um die Lenkstange verhindert.

*Fig:1.*

*Fig:2.*

*Fig:3.*